# EUROPEAN PATENT APPLICATION

(11) **EP 2 604 858 A2**
(43) Date of publication of application: **19.06.2013**
(21) Application number: 12196848.1
(22) Date of filing: 13.12.2012
(51) Int. Cl.: F03G 6/06

(54) **Integrated Solar Combined Cycle Power Generation System and Integrated Solar Combined Cycle Power Generation Method**

(30) Priority: 16.12.2011 JP 2011275686
(71) Applicant: Hitachi Ltd., Tokyo 100-8280 (JP)
(72) Inventor: Mishima, Nobuyoshi, Tokyo, 100-8220 (JP); Sugiura, Takashi, Tokyo, 100-8220 (JP); Sakakura, Toshihiko, Tokyo, 100-8220 (JP)
(74) Representative: MERH-IP Matias Erny Reichl Hoffmann

(57) **Abstract**

The integrated solar combined cycle power generation system includes a solar heat collector 100 for collecting solar heat and generating solar heat steam; a gas turbine 2; a gas turbine exhaust heat recovery boiler 9; and a steam turbine 10; wherein the solar heat steam is decreased in temperature by a solar heat steam desuperheater 42 under a normal condition, and the temperature decrease is stopped or a temperature decrease rate is reduced when the solar heat steam temperature falls due to a cause such as a sudden weather change, wherein the solar heat steam is joined to generated steam by a high-pressure drum 18 or exit steam of a primary superheater 20, and wherein a main steam temperature control by a main steam temperature control valve 30 is combined so that the main steam, the temperature of which is controlled to a predetermined temperature, is supplied to the steam turbine.

## Description

### [Technical Field]

The present invention relates to an integrated solar combined cycle power generation system and an integrated solar combined cycle power generation method and more particularly to a combined cycle power generation system using solar heat in which a solar heat collector is combined with a gas turbine exhaust heat recovery type combined cycle thermal power generation system which generates steam by recovering exhaust heat of a gas turbine and rotates a steam turbine by the generated steam, and steam is further generated by the solar heat collected by the solar heat collector to increase the output of the steam turbine.

### [Background Art]

In a concentrated solar thermal power generation equipment which generates steam by a heat medium heated by solar heat, drives a steam turbine by the steam, and thereby generates power, in order to continue the power generation day and night, an integrated solar combined cycle power generation system with a gas turbine power generation combined is proposed.

In the concentrated solar thermal power generation, in addition to a change in day and night, a large change in the weather in the daytime from dawn to sunset must be considered. For example, in PTL 1 (Japanese Patent Laid-open No. 2008-39367), even if a heat medium changes in temperature with time, the temperature change of the heat medium is leveled, thus at the time of heat supply (at the time of supplying the heat medium to a heat exchanger) for steam generation, the heat medium, temperature change of which is sufficiently suppressed, can be supplied, and the change of the steam condition supplied to the steam turbine can be efficiently suppressed. Concretely, in PTL 1, a heat medium heater using a burner is installed midway on the heat medium supply path for supplying the heat medium heated by the sunlight to the heat exchanger, and even when the heat medium heated by the sunlight is changed in temperature, the heat medium decreased in temperature is heated by the heat medium heater and is supplied to the heat exchanger.

### [Citation List]

### [Patent Literature]

### [PTL 1]

Japanese Patent Laid-open No. 2008-39367, "Concentrated Solar Thermal Power Generation Equipment and Heat Medium Supply Equipment"

### [Summary of Invention]

### [Technical Problem]

For the temperature of steam or a high-temperature heat medium generated by collecting the solar heat, when fine weather suddenly becomes cloudy or rain suddenly falls, thus the sunlight is shut off, a problem arises that the heat medium temperature and steam temperature fall suddenly. In the concentrated solar thermal power generation, a countermeasure against an unexpected sudden temperature change which is peculiar to the solar heat is necessary.

According to the conception of the life consumption of the power equipments such as the steam turbine and the gas turbine exhaust heat recovery boiler, due to the temperature rapid fall and temperature recovery which are generated suddenly, the life of the power generation equipments such as the steam turbine is consumed and there is a fear that damage to the power generation equipments may be caused in the future. To operate safely the power generation equipments for a long period of time, in correspondence with the steam temperature sudden fall phenomenon which is peculiar to the solar heat, it is particularly necessary to prevent a steam temperature change.

In PTL 1, before the heat medium is supplied to the heat exchanger, the heat medium is heated, thus the temperature fall of the heat medium is suppressed and the steam temperature fall is suppressed.

However, in PTL 1, the steam temperature adjustment is performed via the heat medium, so that the steam temperature response is delayed. Further, due to combustion of fossil fuel by the burner of the heat medium heater, carbon dioxide, nitrogen oxide and sulfur oxide are further generated.

An object of the present invention is to provide an integrated solar combined cycle power generation system that, even if the solar heat energy is suddenly decreased, is capable of promptly suppressing a fall in the steam temperature without burning new fossil fuel.

### [Solution to Problem]

To solve the above problem, the present invention includes a solar heat collector for generating steam by a high-temperature heat medium heated by collecting the solar heat or generating steam by collecting the solar heat, a gas turbine, a gas turbine exhaust heat recovery boiler (hereinafter called HRSG), and a steam turbine, wherein under normal conditions (except when the temperature of steam generated by the solar heat collector (hereinafter the steam generated by the solar heat collector is called "solar heat steam") falls due to a sudden weather change), the solar heat steam is joined to steam generated at a high-pressure drum of the HRSG or steam at an exit of a primary superheater of the HRSG while decreasing the temperature of the solar heat steam, and when the temperature of the solar heat steam generated by the solar heat collector falls, the solar heat steam is joined to the steam generated at the high-pressure drum of the HRSG or the steam at the exit of the primary superheater of the HRSG while stopping the temperature decrease or reducing the temperature decrease rate.

Furthermore, in the present invention, the main steam temperature is controlled to a predetermined temperature in combination with the main steam temperature control by the main steam temperature control valve of the HRSG, and then the main steam is supplied to the steam turbine.

### [Advantageous Effects of Invention]

According to the present invention, even if the sunlight is suddenly shut off by clouds and rain and the solar heat energy is suddenly decreased, the steam temperature supplied to the steam turbine can be promptly suppressed from falling without burning new fossil fuel.

### [Brief Description of Drawings]

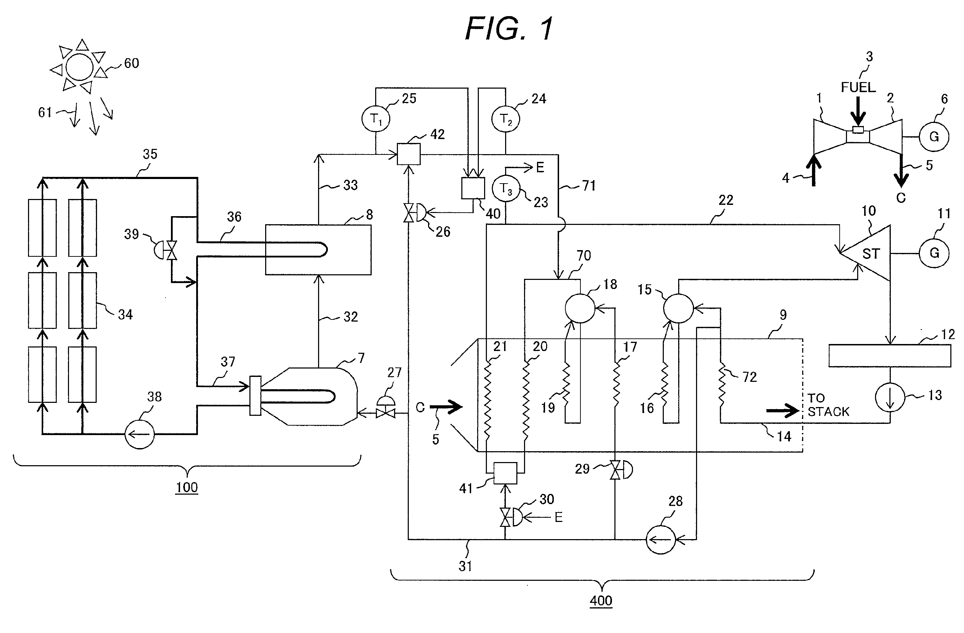

Fig. 1 is a system illustration for explaining an integrated solar combined cycle power generation system relating to an embodiment of the present invention, and illustrates the integrated solar combined cycle power generation system which is a combination of a trough-type solar heat collector and a gas turbine exhaust heat recovery type combined cycle thermal power generation system.

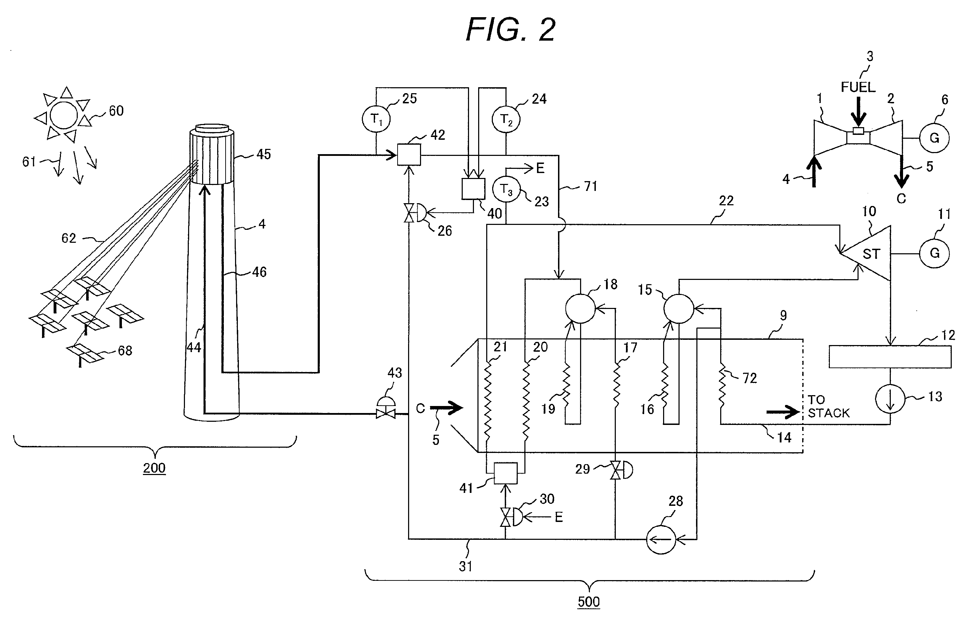

Fig. 2 is a system illustration for explaining an integrated solar combined cycle power generation system relating to another embodiment of the present invention, and illustrates the integrated solar combined cycle power generation system which is a combination of a tower-type solar heat collector and a gas turbine exhaust heat recovery type combined cycle thermal power generation system.

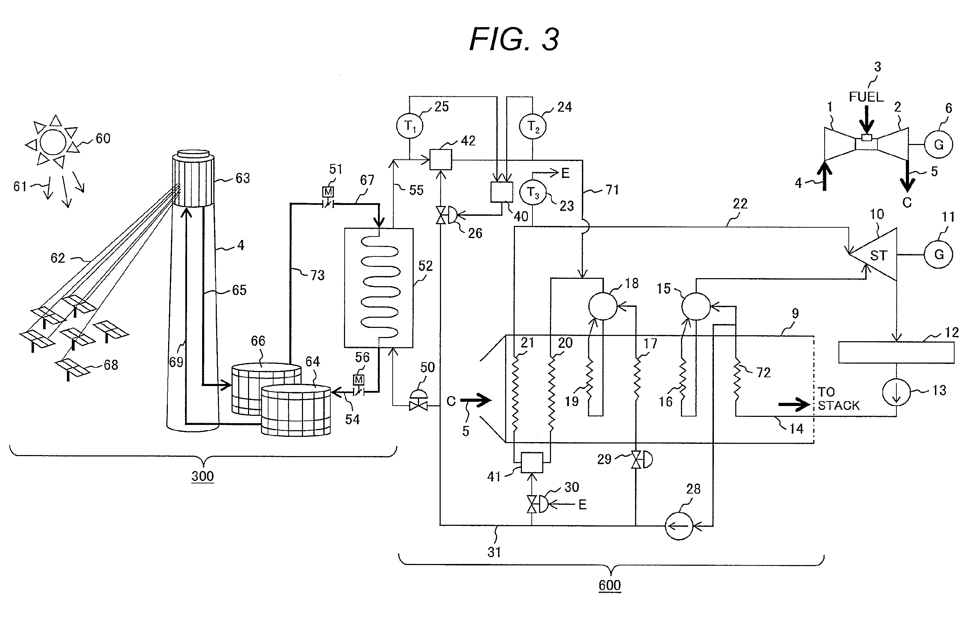

Fig. 3 is a system illustration for explaining an integrated solar combined cycle power generation system relating to still another embodiment of the present invention, and illustrates the integrated solar combined cycle power generation system which is a combination of a tower-type solar heat collector connected to a heat storage tank and a gas turbine exhaust heat recovery type combined cycle thermal power generation system.

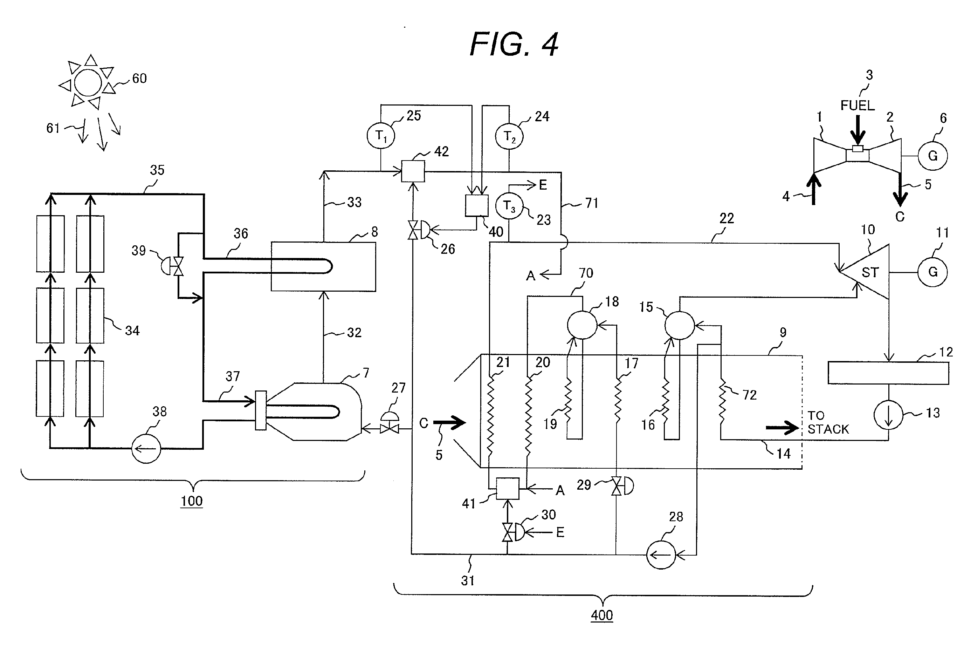

Fig. 4 is a system illustration for explaining an integrated solar combined cycle power generation system relating to a further embodiment of the present invention, and illustrates the integrated solar combined cycle power generation system which is a combination of a trough-type solar heat collector and the gas turbine exhaust heat recovery type combined cycle thermal power generation system.

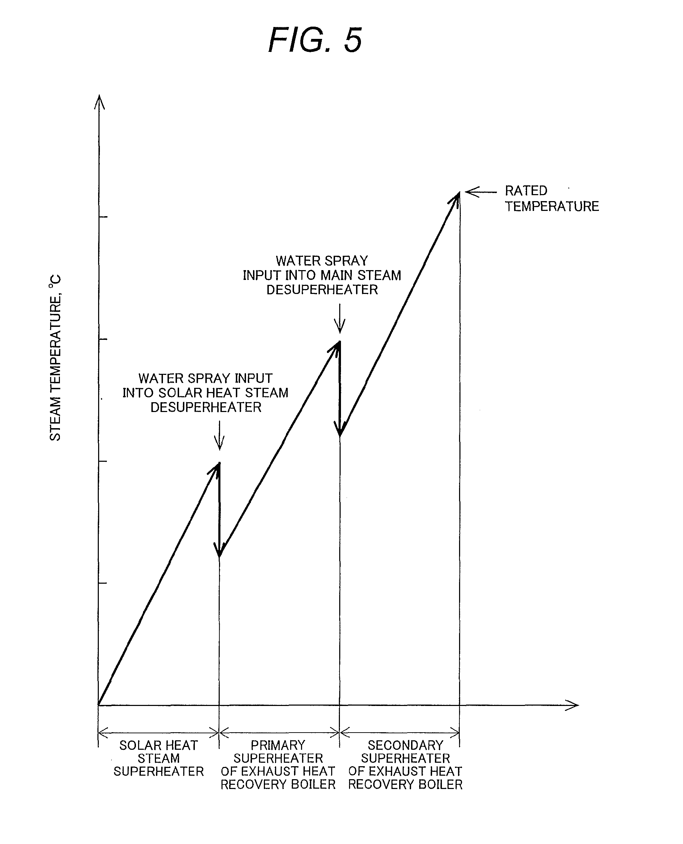

Fig. 5 is a steam temperature change characteristic diagram for explaining a steam temperature control in the embodiment of the present invention illustrated in Fig. 1.

### [Description of Embodiments]

Hereinafter, by referring to the accompanying drawings, embodiments of the present invention will be explained. Further, through the respective drawings, the same numerals are given to the same components.

### [Example 1]

Fig. 1 shows the integrated solar combined cycle power generation system with the solar heat collector and the gas turbine exhaust heat recovery type combined cycle thermal power generation system combined.

This embodiment uses a trough-type solar heat collector 100 as a solar heat collector. The trough-type solar heat collector 100 of this embodiment comprises the basic components of a trough-type solar heat collection reflector 34, a solar heat evaporator 7, and a solar heat steam superheater 8 and has the function for collecting the solar heat to the heat medium and the function for generating steam (superheated steam) by the heated solar heat medium. Concretely, the trough-type solar heat collector 100 is configured as mentioned below.

Sunlight 61 emitted from a sun 60 is collected in the solar heat medium by the trough-type sunlight heat collection reflector 34. The solar heat medium heated to high temperature for transporting solar heat energy flows into a solar heat medium pipe 35, passes through a solar heat superheater entrance solar heat medium pipe 36, and is introduced into the solar heat steam superheater 8 as a heating medium. As a solar heat medium, oil such as turbine lubricating oil is used in a large volume. The solar heat steam superheater 8 heats saturated steam generated by the solar heat evaporator 7 to superheated steam. The solar heat medium leaving the solar heat steam superheater 8 flows inside a solar heat evaporator entrance solar heat medium pipe 37 and is introduced into the solar heat evaporator 7. The solar heat evaporator 7 heats feed water transferred from a feed water pump 28 of a gas turbine exhaust heat recovery boiler 9 by the solar heat medium and generates saturated steam. The solar heat medium leaving the solar heat evaporator 7 is supplied to the trough-type sunlight heat collection reflector 34 by a trough-type solar heat medium circulation pump 38, and is heated again, and flows and circulates in the solar heat medium pipe 35, the solar heat superheater entrance solar heat medium pipe 36, the solar heat steam superheater 8, the solar heat evaporator entrance solar heat medium pipe 37, and the solar heat evaporator 7. Further, the pipe path for bypassing the solar heat steam superheater 8 from the solar heat medium pipe 35 and permitting the solar heat medium to flow through the solar heat evaporator entrance solar heat medium pipe 37 is installed, and on the pipe path, to control the rate of the solar heat medium, a solar heat superheater bypass heat medium control valve 39 is installed.

Next, the generation of superheated steam in the trough-type solar heat collector 100 will be explained. In this embodiment, so as to supply superheated steam to a solar heat-gas turbine exhaust heat recovery boiler 400, superheated steam is generated by the solar heat evaporator 7 and the solar heat steam superheater 8. Feed water from the feed water pump 28 of the gas turbine exhaust heat recovery boiler 9 flows inside a feed water pump exit pipe 31 and is fed to the solar heat evaporator 7. The feed water is heated to saturated steam by the solar heat medium in the solar heat evaporator 7. The evaporation amount in the solar heat evaporator 7 is controlled by a solar heat evaporator water feed rate control valve 27 and the solar heat collection amount is also adjusted. The generated saturated steam flows inside a solar heat evaporator exit steam pipe 32 and is supplied to the solar heat steam superheater 8. In the solar heat steam superheater 8, the saturated steam is heated to superheated steam by the solar heat medium and the superheated steam passes through a solar heat superheater exit steam pipe 33 and enters a solar heat steam desuperheater (attemperator) 42.

Next, the gas turbine exhaust heat recovery type combined cycle thermal power generation system will be explained.

The gas turbine exhaust heat recovery type combined cycle thermal power generation system has the basic components of a gas turbine device, a steam turbine device, and a gas turbine exhaust heat recovery boiler.

The gas turbine device burns gas turbine fuel 3 with air 4 compressed by a gas turbine compressor 1 in a gas turbine combustor. The gas turbine device drives a gas turbine 2 by combustion gas, and rotates a gas turbine generator 6 to generate power. The combustion gas, after leaving the gas turbine 2, becomes gas turbine exhaust gas 5 and flows down into the gas turbine exhaust heat recovery boiler 9.

The steam turbine device includes a steam turbine 10 driven by steam from the gas turbine exhaust heat recovery boiler 9, a steam turbine generator 11, a condenser 12 for condensing exhaust steam of the steam turbine 10 to water, and a condensate pump 13 for feeding the condensate to the gas turbine exhaust heat recovery boiler 9.

The gas turbine exhaust heat recovery boiler 9 generates steam to be supplied to the steam turbine 10 by the gas turbine exhaust gas 5 which is high-temperature gas. The gas turbine exhaust gas 5 goes through a secondary superheater 21, a primary superheater 20, a high-pressure evaporator 19, a high-pressure economizer 17, a low-pressure evaporator 16, and a low-pressure economizer 72, which are installed inside the gas turbine exhaust heat recovery boiler 9, and exchanges heat with condensate, feed water, and steam. After heat exchanging, the gas turbine exhaust gas becomes low-temperature gas, is led to the stack, and then is discharged to the open air. In the gas turbine exhaust heat recovery boiler 9, the condensate pressurized by the condensate pump 13 passes through a condensate pipe 14 and is fed to the low-pressure economizer 72. A part of the water heated by the low-pressure economizer 72 is fed to a low-pressure drum 15, is heated by the low-pressure evaporator 16, and becomes steam at a saturated steam temperature corresponding to the saturated pressure of the low-pressure drum 15. The generated steam is supplied to the steam turbine 10 (at the medium-pressure stage). A part of the water heated by the low-pressure economizer 72 is pressurized by the boiler feed water pump 28 and is fed to the high-pressure economizer 17 via a high-pressure drum water level control valve 29. The water heated by the high-pressure economizer 17 is fed to the high-pressure drum 18, is heated by the high-pressure evaporator 19, and becomes steam at a saturated steam temperature corresponding to the saturated pressure of the high-pressure drum 18. The saturated steam from the high-pressure drum 18 is introduced to and superheated by the primary superheater 20 and the secondary superheater 21. The superheated steam flows down in a main steam pipe 22 as main steam, and enters the steam turbine 10 (at the high-pressure stage). Between the primary superheater 20 and the secondary superheater 21, a main steam desuperheater (attemperator) 41 is installed and the superheated steam from the primary superheater 20 is decreased in temperature by sprayed water of feed water passing inside a main steam temperature control valve 30. Further, the main steam temperature is detected by a main steam temperature detector 23. The detected main steam temperature is compared with the set value of the main steam temperature control valve 30. The sprayed water amount is controlled by the main steam temperature control valve 30 so as to eliminate the deviation from the set value.

Next, a combination of the solar heat collector with the gas turbine exhaust heat recovery type combined cycle thermal power generation system will be explained.

In this embodiment, the solar heat superheater exit steam pipe 33 is connected to a high-pressure drum exit saturated steam pipe 70 and solar heat steam generated by the trough-type solar heat collector 100 is joined to steam from the high-pressure drum 18. The temperature of the solar heat steam generated by the trough-type solar heat collector 100 falls due to a sudden weather change. In this embodiment, except the case that the temperature of the solar heat steam generated by the solar heat collector falls due to a sudden weather change, the solar heat steam is joined to the high-pressure drum generated steam while decreasing temperature of the solar heat steam from the solar heat steam superheater 8, and when the temperature of the solar heat steam falls due to the sudden weather change, the temperature decrease is stopped or the temperature decrease rate is reduced, thereby the steam temperature supplied to the steam turbine is prevented from falling, and the steam temperature is maintained constant. In this embodiment, a gas turbine exhaust heat recovery boiler having the function of receiving the solar heat steam, preventing the steam temperature to be supplied to the steam turbine from falling, and maintaining uniform steam temperature is referred to as a solar heat-gas turbine exhaust heat recovery boiler 400.

A concrete constitution will be explained below. This embodiment uses double control for controlling the main steam to be supplied to the steam turbine, in which the exit steam of the solar heat steam superheater 8 is joined to the high-pressure drum steam while controlling temperature of the exit steam by exit water of the feed water pump, in addition to the main steam temperature control of the gas turbine exhaust heat recovery boiler 9. The solar heat steam (superheated steam) from the solar heat steam superheater 8 passes through the solar heat superheater exit steam pipe 33 and enters a solar heat steam desuperheater (attemperator) 42. In the solar heat steam desuperheater 42, a part of feed water of the boiler feed water pump 28 is fed and sprayed through a solar heat steam temperature control valve 26 and the entrance steam temperature of the solar heat steam desuperheater 42 is detected by a solar heat steam desuperheater entrance temperature detector 25. Furthermore, the steam temperature at the exit of the solar heat steam desuperheater 42 is detected by a solar heat steam desuperheater exit temperature detector 24. A solar heat steam desuperheater exit temperature control unit 40 collects signals of the two, compares them with respective set temperatures to generate a control signal, and transmits the control signal to the solar heat steam temperature control valve 26. The solar heat steam desuperheater exit temperature control unit 40 controls the solar heat steam temperature control valve 26 so that the temperature will be decreased when the detection temperature of the solar heat steam desuperheater entrance temperature detector 25 is higher than the set temperature. For example, during the regular operation, the solar heat steam temperature is decreased by several tens of degrees. Further, the detection signal of the solar heat steam desuperheater exit temperature detector 24 is compared with the steam conditions of the saturated steam generated by the high-pressure drum 18 and the solar heat steam desuperheater exit temperature control unit 40 controls the solar heat steam temperature control valve 26 so as to generate a saturated steam, temperature of which corresponds to the saturated pressure of the high-pressure drum 18.

The steam decreased and adjusted in temperature passes through a solar heat steam desuperheater exit pipe 71 and is joined to the saturated steam which comes out from the high-pressure drum 18 and flows inside the high-pressure drum exit saturated steam pipe 70 at an equivalent temperature. And, the steam is superheated by the primary superheater 20 and then enters the main steam desuperheater 41. Here, the steam is decreased in temperature again by sprayed water of feed water passing through a main steam temperature control valve 30. Furthermore, the steam is introduced into the secondary superheater 21, is superheated again, flows down in the main steam pipe 22 as main steam, and enters the steam turbine 10. These steam temperature controls in this embodiment will be explained below by the steam temperature change characteristic diagram illustrated in Fig. 5. The steam superheated by the solar heat steam superheater 8 is decreased to the temperature of steam generated in the high-pressure drum by inputting sprayed water in the solar heat steam desuperheater 42. The mixed steam of the high-pressure drum steam with the solar heat steam is superheated by the primary superheater 20 and decreased to a predetermined temperature by inputting sprayed water in the main steam desuperheater 41. And, the steam is superheated to the rated temperature of the main steam in the secondary superheater 21.

When the solar heat steam temperature is suddenly decreased due to a sudden weather change (for example, at the time of sunlight shut-off), the solar heat steam temperature control valve 26 executes control of rapidly reducing the amount of sprayed water so that the temperature decrease will be quickly stopped or the temperature decrease rate will be rapidly reduced by the solar heat steam desuperheater exit temperature control unit 40. Namely, the degree of temperature decrease due to input of sprayed water in the solar heat steam desuperheater 42 shown in Fig. 5 is controlled (quickly changed). Further, if the temperature cannot be decreased to the rated temperature by stopping the input of sprayed water in the solar heat steam desuperheater 42, the input of sprayed water in the main steam desuperheater 41 is adjusted to reduce to the rated temperature.

In this embodiment, the double temperature control is executed. Namely, the high-pressure drum generation steam and the solar heat steam always decreased in temperature are joined to each other. Furthermore, sprayed water for decreasing temperature is fed from the boiler feed water pump to the steam desuperheater for always decreasing temperature of the solar heat steam. And, the temperature decreased steam is supplied to the secondary superheater. Furthermore, the temperature of the main steam is controlled to a fixed temperature by the main steam temperature control valve, and the main steam is supplied to the steam turbine. By use of such a constitution, if the temperature of the steam generated by the solar heat falls suddenly due to a sudden weather change, it is possible to prevent the temperature fall of the main steam flowing into the steam turbine and to continuously keep the main steam temperature almost constant by rapidly reducing the amount of the sprayed water for decreasing the temperature.

Further, in this embodiment, instead of the steam temperature adjustment via the heat medium, the steam temperature is adjusted by quickly reducing the amount of the sprayed water, so that the steam temperature response is not delayed. And, to keep the steam temperature fixed, combustion of new fossil fuel is not necessary.

Further, as mentioned above, in the case of the concentrated solar thermal power generation system which collects the solar heat, produces steam, rotates the steam turbine, and generates power, due to a sudden weather change, the sunlight is shut off, and a time zone in which the solar heat energy cannot be collected takes place, and the influence appears as a sudden fall in the steam temperature. As a result, the steam turbine receiving the steam is cooled suddenly and it exerts an influence of impairing the life of the steam turbine. After the sudden fall, also when the temperature is recovered promptly, the life of the steam turbine is impaired. In this embodiment, the main steam temperature can be kept constant, so that the life of the steam turbine is not impaired. Further, in this embodiment, the temperature of the solar heat steam joined to the gas turbine exhaust heat recovery boiler can be continuosly kept almost constant (an extensive steam temperature change of the solar heat steam can be suppressed and the change can be minimized). Therefore, not only the temperature change of the steam to be supplied to the steam turbine can be prevented but also the temperature change of the steam to be supplied to the gas turbine exhaust heat recovery boiler can be prevented, so that the life of the gas turbine exhaust heat recovery boiler is not impaired.

Therefore, according to this embodiment, even if the solar heat energy is used, an almost constant temperature can be always supplied to the steam turbine of the gas turbine exhaust heat recovery type combined cycle thermal power generation system regardless of a weather change. Therefore, a combined cycle power generation system using the solar heat capable of performing a long period stable operation without impairing the life of the steam turbine and improving the output and efficiency by utilizing the solar heat energy can be made possible.

### [Example 2]

Another embodiment of the present invention is shown in Fig. 2. In this embodiment, in place of the trough-type solar heat collector in Example 1 (Fig. 1), a steam-type tower solar heat collector 200 is used. The others are similar to Example 1. This embodiment uses double control for controlling the main steam to be supplied to the steam turbine, in which the exit steam of the tower-type solar heat collector is joined to the high-pressure drum steam while controlling temperature of the exit steam by exit water of the boiler feed water pump, in addition to the main steam temperature control of the gas turbine exhaust heat recovery boiler 9.

The steam-type tower solar heat collector 200 in this embodiment is a tower-type solar heat collector for collecting the solar heat energy by a steam-type tower reflector. The sunlight 61 emitted from the sun 60 is collected in a steam-type tower heat collector 45 as a sunlight reflected light beam 62 by a heliostat 68. A part of exit feed water of the low-pressure economizer 72 is pressurized by the boiler feed water pump 28, flows in a tower-type heat collector water feed pipe 44, and is fed to the steam-type tower heat collector 45. The solar heat steam generated in the steam-type tower heat collector 45 flows in a steam-type tower heat collector exit pipe 46 and enters the solar heat steam desuperheater 42. In this embodiment, the high-temperature heat medium transporting the solar heat energy is steam (superheated steam). The water feed amount to the steam-type tower heat collector 45 is adjusted by a tower-type heat collector water feed control valve 43. The other constitutions are similar to Example 1.

This embodiment also can produce the effects similar to Example 1.

### [Example 3]

Still another embodiment of the present invention is shown in Fig. 3. In this embodiment, in place of the steam-type tower solar heat collector in Example 2 (Fig. 2), a heat storage type tower solar heat collector 300 is used. The others are similar to Examples 1 and 2. This embodiment uses double control for controlling the main steam to be supplied to the steam turbine, in which the exit steam of a high-temperature heat medium steam generator 52 is joined to the high-pressure drum steam while controlling temperature of the exit steam by exit water of the boiler feed water pump, in addition to the main steam temperature control of the gas turbine exhaust heat recovery boiler 9.

The heat storage type tower solar heat collector 300 in this embodiment uses the basic components of the tower-type solar heat collector for collecting the solar heat energy by the heliostat, a heat storage tank, and a high-temperature heat medium steam generator. The solar heat energy is collected in a high-temperature heat medium tower-type heat collector 63 and the high-temperature heat medium for transporting the heat energy flows in a heat collection tower exit high-temperature heat medium pipe 65, and is once stored in a high-temperature heat storage tank 66. The high-temperature heat medium flowing in a high-temperature heat storage exit pipe 73 comes out from a high-temperature heat medium steam generator entrance valve 51, passes through a high-temperature heat medium steam generator entrance pipe 67, and enters a high-temperature heat medium steam generator 52. Feed water fed to the high-temperature heat medium steam generator 52 from the boiler feed water pump 28 is heated by the high-temperature heat medium heated by the solar heat to generate steam. Water fed via a high-temperature heat medium steam generator water feed control valve 50 becomes steam (superheated steam). The steam passes through a high-temperature heat medium steam generator exit steam pipe 55, and enters the solar heat steam desuperheater 42. The heat medium leaving the high-temperature heat medium steam generator 52 passes through a heat medium steam generator exit valve 56 and a low-temperature heat storage tank entrance pipe 54, is supplied to a low-temperature heat storage tank 64, flows from the low-temperature heat storage tank 64 into a heat collection tower entrance heat medium pipe 69, and is supplied to the high-temperature heat medium tower-type heat collector 63. The other constitutions are similar to Examples 1 and 2.

In the heat storage type tower solar heat collector, the steam temperature change suppression effect by the heat storage tank is obtained to a certain extent, though the present invention may be applied to an integrated solar combined cycle power generator using the heat storage type tower solar heat collector 300 and this embodiment also can produce the effects similar to Examples 1 and 2.

### [Example 4]

A further embodiment of the present invention is shown in Fig. 4. In this embodiment, the solar heat steam is joined to the exit steam of the primary superheater in place of the steam generated in the high-pressure drum. The others are similar to Example 1 (Fig. 1). Further, this embodiment can be applied similarly to the embodiments shown in Figs. 2 and 3.

The solar heat steam from the trough-type solar heat collector 100 is decreased in temperature by the solar heat steam desuperheater 42 and is joined to the exit portion (on the upstream side of the main steam desuperheater 41) of the primary superheater 20. The exit steam of the primary superheater after the joint is further decreased in temperature by the exit water of the feed water pump. The steam decreased in temperature is introduced into and superheated by the secondary superheater 21 to obtain main steam at a fixed temperature. The temperature decrease in the solar heat steam desuperheater 42 by the solar heat steam desuperheater exit temperature control unit 40 is adjusted so that the solar heat steam to be joined to the exit portion of the primary superheater 20 becomes superheated steam.

Also under the double main steam temperature control of this embodiment, the effects similar to Example 1 can be produced. Furthermore, in this embodiment, superheated steams are joined to each other, so that the temperature control effects are better than the case that saturated steam and desuperheated steam from the solar heat steam desuperheater are joined to each other as explained in Example 1 (Fig. 1).

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### [Reference Signs List]

1: Gas turbine compressor, 2: Gas turbine, 3: Gas turbine fuel, 4: Air, 5: Gas turbine exhaust gas, 6: Gas turbine generator, 7: Solar heat evaporator, 8: Solar heat steam superheater, 9: Gas turbine exhaust heat recovery boiler (HRSG), 10: Steam turbine, 11: Steam turbine generator, 12: Condenser, 13: Condensate pump, 14: Condensate pipe, 15: Low-pressure drum, 16: Low-pressure evaporator, 17: High-pressure economizer, 18: High-pressure drum, 19: High-pressure evaporator, 20: Primary superheater, 21: Secondary superheater, 22: Main steam pipe, 23: Main steam temperature detector, 24: Solar heat steam desuperheater exit temperature detector, 25: Solar heat steam desuperheater entrance temperature detector, 26: Solar heat steam temperature control valve, 27: Solar heat evaporator feed water amount control valve, 28: Boiler feed water pump, 29: High-pressure drum water level control valve, 30: Main steam temperature control valve, 31: Feed water pump exit pipe, 32: Solar heat evaporator exit steam pipe, 33: Solar heat superheater exit steam pipe, 34: Trough-type sunlight heat collection reflector, 35: Solar heat medium pipe, 36: Solar heat superheater entrance solar heat medium pipe, 37: Solar heat evaporator entrance solar heat medium pipe, 38: Trough-type solar heat medium circulation pump, 39: Solar heat superheater bypass heat medium control valve, 40: Solar heat steam desuperheater exit temperature control unit, 41: Main steam desuperheater, 42: Solar heat steam desuperheater, 43: Tower-type heat collector water feed control valve, 44: Tower-type heat collector water feed pipe, 45: Steam-type tower heat collector, 46: Steam-type tower heat collector exit pipe, 50: High-temperature heat medium steam generator water feed control valve, 51: High-temperature heat medium steam generator entrance valve, 52: High-temperature heat medium steam generator, 53: High-temperature heat medium steam generator exit valve, 54: Low-temperature heat storage tank entrance pipe, 55: High-temperature heat medium steam generator exit steam pipe, 56: Heat medium steam generator exit valve, 60: Sun, 61: Sunlight beam, 62: Sunlight reflected light beam, 63: High-temperature heat medium tower-type heat collector, 64: Low-temperature heat storage tank, 65: Heat collection tower exit high-temperature heat medium pipe, 66: High-temperature heat storage tank, 67: High-temperature heat medium steam generator entrance pipe, 68: Heliostat (sunlight reflection plane mirror), 69: Heat collection tower entrance heat medium pipe, 70: High-pressure drum exit saturated steam pipe, 71: Solar heat steam desuperheater exit pipe, 72: Low-pressure economizer, 73: High-temperature heat storage tank exit pipe, 100: Trough-type solar heat collector, 200: Steam-type tower solar heat collector, 300: Heat storage type tower solar heat collector, 400, 500, 600: Solar heat and gas turbine exhaust heat recovery boiler.

## Claims

1. An integrated solar combined cycle power generation system comprising:
a solar heat collector (100) for generating steam by a heat medium heated by solar heat or generating steam by collecting the solar heat;
a gas turbine (2);
a gas turbine exhaust heat recovery boiler (9);
a steam turbine (10);
a solar heat steam supply pipe conduit for supplying the steam generated by the solar heat collector (100) to an exit pipe of a high-pressure drum (18) of the gas turbine exhaust heat recovery boiler (9) or for supplying steam generated by the solar heat collector (100) to an exit pipe of a primary superheater (20) of the gas turbine exhaust heat recovery boiler (9);
a solar heat steam desuperheater (42) installed in the solar heat steam supply pipe conduit for decreasing a temperature of the steam flowing inside the solar heat steam supply pipe conduit; and
a control unit for controlling the temperature decrease by the solar heat steam desuperheater (42), wherein the control unit being configured to stop the temperature decrease by the desuperheater (42) or reduce a temperature decrease rate when the temperature of the steam generated by the solar heat collector (100) falls.

2. The integrated solar combined cycle power generation system according to Claim 1, wherein the control unit is configured to control the temperature decrease so that the temperature of the steam generated by the solar heat collector (100) and supplied to the exit pipe of a high-pressure drum (18) becomes a temperature of saturated steam generated by the high-pressure drum (18) of the gas turbine exhaust heat recovery boiler (9).

3. The integrated solar combined cycle power generation system according to Claim 1, wherein the control unit is configured to control the temperature decrease so that the temperature of the steam generated by the solar heat collector (100) and supplied to the exit pipe of a primary superheater (20) becomes a condition of superheated steam.

4. The integrated solar combined cycle power generation system according to any one of Claims 1 to 3, further comprising a main steam desuperheater (41) between a primary superheater (20) and a secondary superheater (21) of the gas turbine exhaust heat recovery boiler (9).

5. The integrated solar combined cycle power generation system according to at least one of Claims 1 to 4, wherein
the solar heat collector (100) includes a trough-type sunlight heat collection reflector (34), an evaporator (7) for generating steam using the heat medium heated by the trough-type sunlight heat collection reflector (34) as a heating medium, and an superheater (8) for superheating the steam evaporated by the evaporator (7) using the heated heat medium as a heating medium;
the solar heat steam desuperheater (42) sprays feed water from a feed water pump (28) of the gas turbine exhaust heat recovery boiler (9); and
the control unit is configured to adjust the spray amount so that the temperature decrease is controlled, and to execute a rapid reduction of the spray amount at the time of sunlight shut-off.

6. The integrated solar combined cycle power generation system according to at least one of Claims 1 to 4, wherein
the solar heat collector (100) includes a heliostat (68) and a steam-type tower solar heat collector (200);
the solar heat steam desuperheater (42) sprays feed water from a feed water pump (28) of the gas turbine exhaust heat recovery boiler (9); and
the control unit is configured to adjust the spray amount so that the temperature decrease is controlled, and to execute a rapid reduction of the spray amount at the time of sunlight shut-off.

7. The integrated solar combined cycle power generation system according to at least one of Claims 1 to 4, wherein
the solar heat collector includes a heliostat (68), a heat storage type tower solar heat collector (300), and an evaporator (7) for generating superheated steam using the heat medium heated by the heat storage type tower solar heat collector (300) as a heated medium;
the solar heat steam desuperheater (42) sprays feed water from a feed water pump (28) of the gas turbine exhaust heat recovery boiler (9); and
the control unit is configured to adjust the spray amount so that the temperature decrease is controlled, and to execute a rapid reduction of the spray amount at the time of sunlight shut-off.

8. An integrated solar combined cycle power generation method for supplying steam generated by solar heat to a gas turbine exhaust heat recovery type combined cycle thermal power generation system including a gas turbine (2), a gas turbine exhaust heat recovery boiler (9), and a steam turbine and improving output of the steam turbine (10), comprising the steps of:
decreasing a temperature of the steam generated by the solar heat during a normal operation and joining the solar heated steam to steam generated by a high-pressure drum (18) of the gas turbine exhaust heat recovery boiler (9) or steam at an exit of a primary superheater (20) of the gas turbine exhaust heat recovery boiler (9); and
stopping the temperature decrease rapidly or reducing a temperature decrease rate rapidly at the time of sunlight shut-off and joining the solar heated steam to the steam generates by the high-pressure drum (18) or the steam at the exit of the primary superheater (20).

9. The integrated solar combined cycle power generation method according to Claim 8, wherein further comprising the step of:
controlling a temperature of a main steam to be supplied to the steam turbine (10) to a predetermined temperature in combination with a main steam temperature control of the gas turbine exhaust heat recovery boiler (9).
